# EUROPÄISCHE PATENTSCHRIFT

(11) **EP 3 417 981 B1**
(45) Veröffentlichungstag und Bekanntmachung des Hinweises auf die Patenterteilung: **05.07.2023**
(21) Anmeldenummer: 18173148.0
(22) Anmeldetag: 18.05.2018
(51) Int. Cl.: B23K 20/12, H01B 7/08, H01R 4/62, H01R 43/02, B23K 20/233, B23K 101/38, B60R 16/02, B23K 101/36, B23K 103/10, B23K 103/12

(54) **VERFAHREN ZUM ANBRINGEN WENIGSTENS EINES ELEKTRISCHEN KONTAKTELEMENTS AN EINER ALUMINIUMSCHIENE FÜR EIN BORDNETZ EINES KRAFTFAHRZEUGS**
METHOD FOR APPLYING AT LEAST ONE ELECTRIC CONTACT ELEMENT TO AN ALUMINIUM RAIL FOR A VEHICLE ELECTRICAL SYSTEM OF A MOTOR VEHICLE
PROCÉDÉ D'APPLICATION D'AU MOINS UN ÉLÉMENT ÉLECTRIQUE CONTACT À UN RAIL EN ALUMINIUM POUR UN RÉSEAU DE BORD D'UN VÉHICULE AUTOMOBILE

(30) Priorität: 01.06.2017 DE 102017112097
(43) Veröffentlichungstag der Anmeldung: 26.12.2018
(73) Patentinhaber: Lisa Dräxlmaier GmbH, 84137 Vilsbiburg (DE)
(72) Erfinder: Lichtenberg, Erwin, 4644 Scharnstein (AT); Wortberg, Michael, 84405 Dorfen (DE); Forstmeier, Christoph, 84028 Landshut (DE)

(56) Entgegenhaltungen:
- EP-A1- 2 343 220
- EP-B1- 2 157 322
- WO-A1-2010/130271
- DE-B3-102006 050 709
- JP-A- 2005 021 948
- JP-A- 2009 082 977
- JP-A- 2013 045 781
- JP-B2- 5 593 089
- W M Thomas ET AL: "The simultaneous use of two or more friction stir welding tools", , 13. Januar 2005 (2005-01-13), XP055303730, Gefunden im Internet: URL:https://www.twi-global.com/technical-k nowledge/published-papers/the-simultaneous -use-of-two-or-more-friction-stir-welding- tools-january-2005/ [gefunden am 2018-10-15]

## Beschreibung

### Technisches Gebiet

Die vorliegende Erfindung betrifft ein Verfahren zum Anbringen wenigstens eines elektrischen Kontaktelements an einer Aluminiumschiene für ein Bordnetz eines Kraftfahrzeugs.

### Stand der Technik

In Kraftfahrzeugen werden voraussichtlich immer häufiger im Wesentlichen massive Aluminiumschienen, beispielsweise in Form von Flachleiterschienen aus Aluminium oder auch sogenannte Multischienen, die mehrere zueinander lagig angeordnete Flachleiterschienen aufweisen, als Teil der Bordnetzstruktur eingesetzt werden. Aluminium hat allerdings die Eigenschaft, bei Verformung, wie beispielsweise bei einem Crimpvorgang, nachzusetzen oder wegzufließen. Aluminium ist im niedriglegierten Zustand, wie es als Leiter für Bordnetzstrukturen benötigt wird, weich und kann über der Zeit keine Spannungskräfte aufrechterhalten. Flachleiterschienen aus Aluminium oder auch Multischienen für Bordnetze werden üblicherweise mit Kontaktelementen aus Kupfer kombiniert, an welchen weitere Leiter, wie beispielsweise Rundleiter und dergleichen, angeschlossen werden können, um über derartige Leiter wiederum Verbindungen zu weiteren elektrischen Verbrauchern im Kraftfahrzeug herzustellen. Eine dauerhaft zuverlässige Verbindung derartiger elektrischer Kontaktelemente mit Aluminiumschienen, beispielsweise in Form von Flachleiterschienen oder Multischienen, bringt also gewisse Herausforderungen mit sich.

Eine Möglichkeit zur Verbindung eines Kontaktelements mit einer Aluminiumschiene schlägt z.B. die DE 10 2014 004 433 A1 vor, bei der das Kontaktelement aus einem Kupferwerkstoff besteht und durch eine damit walzplattiertes Anschlussstück aus einem Aluminiumwerkstoff an der Aluminiumschiene befestigt wird. Obwohl damit eine dauerhaltbare Verbindung bewerkstelligt werden kann, besteht weiterhin der Wunsch nach einer noch zuverlässigeren Verbindung.

Die WO 2015/058887 A1 zeigt eine elektrische Anschlusskonsole für eine Kfz-Bordnetzleitung. Die elektrische Anschlusskonsole umfasst einen metallischen Leiter, der mittels eines Ultraschallweißverfahrens mit einem Flachteil verbunden worden ist. Jeweilige Schweißnähte werden vor Umwelteinflüssen geschützt, indem diese mit einem Isolator umspritzt werden.

Die DE 10 2016 105 768 B3 beschreibt einen elektrischen Leiter, in welchen eine Reibschweißhülse eingesetzt werden kann. In die Reibschweißhülse kann ein Reibschweißwerkzeug eingesetzt werden.

Des Weiteren offenbart die JP 2005 021 948 A ein Rotationswerkzeug und ein feststehendes Werkzeug mit einer Spitzenfläche. Ein Werkstück aus unterschiedlichen Schichten ist zwischen dem Rotationswerkzeugs und der Spitzenfläche des feststehenden Werkzeugs dergestalt angeordnet, dass das Rotationswerkzeug durch eine Führungsbohrung durch die Schichten die Schichten des Werkstücks verschweißt.

Die japanische Anmeldung JP 2011 173 163 A zeigt ein Reibschweißverfahren zum Schweißen von zwei oder mehr Blechen, wobei mittels einer Bohrung eine Reibschweißvorrichtung alle Blechschichten durchdringt.

Das Paper "The simultaneous use of two or more friction stir welding tools" von W. M. Thomas, et. al., TWI Ltd., Cambridge, im Internet veröffentlicht am 13. Januar 2005, offenbart die Verwendung von zwei Reibschweißvorrichtungen an gegenüberliegenden Seiten eines einstückigen Werkstücks.

Gemäß der EP 2 343 220 A1, welche die Basis für den Oberbegriff von Anspruch 1 bildet, umfasst eine Kraftfahrzeugbatterieleitung ein erstes Anschlusselement für einen Batteriepol, ein zweites Anschlusselement für zumindest einen Verbraucher, und einem zwischen dem ersten Anschlusselement und dem zweiten Anschlusselement angeordneten Flachleiter, wobei der Flachleiter mittels eines Schweißverfahrens zur Verbindung des ersten und zweiten Anschlusselements dient.

Die WO 2010/130271 A1 offenbart ein Reibschweißverfahren zur Verbindung von Fügeteilen, wobei die Fügeteile vor dem Reibschweißen durch ein Klebemittel relativ zueinander fixiert werden. Durch das Klebemittel wird beim anschließenden Reibschweißen sichergestellt, dass die beim Reibschweißen auftretenden Kräfte nicht zu relativen Lageänderungen der Fügeteile während des Reibschweißens führen.

Die japanische Patentanmeldung JP 2009 082 977 A1 beschreibt eine Reibungspunktschweißverfahren zum Verschweißen eines Leichtmetallblechs und eines Stahlblechs mit einer jeweils korrespondierenden Kontur. Zwischen den Konturen des Leichtmetallblechs und des Stahlblechs wird ein Haftmittels eingebracht, das während des Schweißvorgangs aufgrund der Reibungswärme erweicht und plastisch wird. Dadurch ist es möglich eine Schweißverbindung zwischen dem Leichtmetallblech und dem Stahlblech im Festphasenzustand zu erzeugen.

Des Weiteren beschreibt die JP 2013 045 781 A1 das Verschweißen einer Abdeckplatte mit einem entsprechenden Gehäuse ohne den gesamten Umfang einer Gehäuseöffnung kontinuierlich zu verschweißen und ein Kühlmedium auszuleiten.

### Beschreibung der Erfindung

Es ist daher die Aufgabe der vorliegenden Erfindung, eine technische Lösung bereitzustellen, mittels welcher eine einerseits besonders einfache und andererseits besonders zuverlässige Verbindung wenigstens eines elektrischen Kontaktelements an einer Aluminiumschiene für ein Bordnetz eines Kraftfahrzeugs ermöglicht wird.

Diese Aufgabe wird durch ein Verfahren zum Anbringen wenigstens eines elektrischen Kontaktelements an einer Aluminiumschiene für ein Bordnetz eines Kraftfahrzeugs gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Anbringen wenigstens eines elektrischen Kontaktelements an einer Aluminiumschiene für ein Bordnetz eines Kraftfahrzeugs wird das elektrische Kontaktelement mit seiner Unterseite an einer vorgegebenen Kontaktfläche der Aluminiumschiene angeordnet und mittels Reibschweißen in einem innerhalb der Kontaktfläche angeordneten Fügebereich mit der Aluminiumschiene stoffschlüssig verbunden. Vorzugsweise können das Kontaktelement und die Aluminiumschiene flächig aufeinander liegen. Durch das erfindungsgemäße Fügen mittels des Reibschweißens entsteht eine stoffschlüssige Verbindung ohne zusätzliche Hilfsmaterialien oder speziell vorkonfektionieren oder gefügten Materialen, um zwischen dem elektrischen Kontaktelement und der Aluminiumschiene einen Übergang herzustellen. Bei dem erfindungsgemäßen Verfahren stellt das elektrische Kontaktelement also gleichzeitig eine Art Fügeteil dar, welches über eine Reibschweißverbindung stoffschlüssig mit der Aluminiumschiene verbunden wird. Durch eine geeignete Wahl von Fügebereichen kann der für die jeweilige Anwendung benötigte Querschnitt für den elektrischen Übergang auf einfache Wiese erzeugt und sichergestellt werden.

Das erfindungsgemäße Verfahren ist besonders einfach und kommt mit einem Minimum an Verfahrensschritten und Werkstoffen auf. Mittels des erfindungsgemäßen Verfahrens ist es zudem möglich, jeweilige Kontaktabgänge von der Aluminiumschiene in Form der stoffschlüssig angebrachten elektrischen Kontaktelemente besonders bauraumsparend und preiswert herzustellen. Dies wirkt sich wiederum positiv auf die Gewichts- und Umweltbilanz des erfindungsgemäßen Verfahrens und der so hergestellten Reibschweißverbindung aus. Es ist zudem vorgesehen, dass zumindest ein Reibschweißdorn auf eine von der Aluminiumschiene abgewandte Oberseite des elektrischen Kontaktelements aufgesetzt und durch Rotieren des Reibschweißdorns das elektrische Kontaktelement stoffschlüssig mit der Aluminiumschiene verbunden wird. Bei der nicht erfinderischen

Verwendung eines einzigen Reibschweißdorns in
der beschriebenen Weise kann es beispielsweise vorgesehen sein, dass die Aluminiumschiene mit ihrer von dem Reibschweißdorn abgewandten Seite mittels eines entsprechend dafür ausgelegten Werkzeugs zuverlässig gehalten wird. Durch die Verwendung des Reibschweißdorns ist es auf besonders einfache und zuverlässige Weise möglich, die besagte stoffschlüssige Verbindung zwischen dem elektrischen Kontaktelement und der Aluminiumschiene herzustellen.

Des Weiteren sieht die Erfindung vor, dass vor dem Reibschweißen zumindest eine Führungsbohrung in das elektrische Kontaktelement eingebracht und danach ein Vorsprung des Reibschweißdorns in die Führungsbohrung eingesetzt wird. Beim anschließenden Rotieren des Reibschweißdorns kann durch das Vorsehen der Führungsbohrung und durch das Einsetzen des Vorsprungs des Reibschweißdorns in die Führungsbohrung sichergestellt werden, dass der eigentliche Reibschweißvorgang besonders prozesssicher durchgeführt werden kann. Ein wie auch immer geartetes versehentliches Abrutschen des Reibschweißdorns während des Reibschweißvorgangs kann dadurch zuverlässig verhindert werden.

Gemäß der Erfindung ist es vorgesehen, dass ein weiterer Reibschweißdorn auf eine von der Kontaktfläche abgewandte Seite der Aluminiumschiene gegenüberliegend vom anderen Reibschweißdorn aufgesetzt und durch Rotieren der beiden Reibschweißdorne das elektrische Kontaktelement stoffschlüssig mit der Aluminiumschiene verbunden wird. In dem Fall ist kein aufwendiges Werkzeug notwendig, um die Aluminiumschiene während des Reibschweißvorgangs zu halten. Denn dadurch, dass zwei Reibschweißdorne eingesetzt werden, welche auf jeweils gegenüberliegenden Seiten der Aluminiumschiene rotieren und die Aluminiumschiene sowie das Kontaktelement mit Druck beaufschlagen, kann ein besonders einfacher und zuverlässiger Reibschweißvorgang sichergestellt werden. Zudem wird in diesem Fall durch den weiteren Reibschweißdorn auch entsprechende Hitze in die Aluminiumschiene eingebracht, was sich positiv auf den Reibschweißvorgang auswirken kann.

Zusätzlich kann es vorgesehen sein, dass vor dem Anordnen des elektrischen Kontaktelements an der Kontaktfläche der Aluminiumschiene an der Unterseite des elektrischen Kontaktelements eine den herzustellenden Fügebereich umschließende Dichtung, insbesondere eine selbstklebende Klebedichtung, angebracht wird. Beispielsweise ist es möglich, dass die Dichtung derart angebracht wird, dass diese die gesamte vorgegebene Kontaktfläche umschließt. Durch das Vorsehen der Dichtung kann sichergestellt werden, dass nach dem Reibschweißvorgang keine Flüssigkeit durch Kapillarwirkung in den Fügebereich gelangen kann. Dadurch können Korrosionen im Fügebereich zuverlässig verhindert werden.

Eine weitere vorteilhafte Ausführungsform der Erfindung sieht vor, dass an der Unterseite des elektrischen Kontaktelements eine Nut hergestellt und in dieser die Dichtung angeordnet wird. Dadurch kann die Dichtung besonders exakt an der vorgesehenen Stelle, nämlich in der hergestellten Nut, angeordnet werden. Ferner kann dadurch sichergestellt werden, dass bis zum Reibschweißvorgang die Dichtung auch sicher in der Nut gehalten wird. Dies trägt wiederum dazu bei, dass der hergestellte Fügebereich später zuverlässig gegen Wassereintritt abgedichtet werden kann.

Alternativ oder zusätzlich ist es vorgesehen, dass vor dem Anordnen des elektrischen Kontaktelements an der Kontaktfläche der Aluminiumschiene an der Unterseite des elektrischen Kontaktelements ein als Formteil ausgebildeter Schmelzklebstoff angebracht wird, welcher beim Reibschweißen schmilzt und dadurch den Fügebereich zumindest wasserdicht verschließt. Bei dem als Formteil ausgebildeten Schmelzklebstoff kann es sich beispielsweise um eine Art Platte handeln, welche vorzugsweise sogar selbstklebend ist, sodass diese besonders einfach an der Unterseite des elektrischen Kontaktelements angebracht werden kann. Während des Reibschweißvorgangs trägt die Prozesswärme dann dazu bei, dass der Schmelzklebstoff aufschmilzt und in Folge dessen den Fügebereich zumindest wasserdicht verschließt. Dadurch kann ein definierter Verschluss der Schweißstelle sichergestellt werden. Dies trägt ebenfalls dazu bei, dass keine Korrosion im Fügebereich auftreten kann.

Eine weitere vorteilhafte Ausführungsform der Erfindung sieht vor, dass vor dem Anordnen des elektrischen Kontaktelements an der Kontaktfläche der Aluminiumschiene eine die Kontaktfläche bedeckende Isolierung entfernt wird. Üblicherweise sind derartige Aluminiumschienen für Bordnetze von Kraftfahrzeugen mit einer Isolierung, zumeist mit einer Kunststoffisolierung, versehen. Damit diese Isolierung sich nicht negativ auf den Reibschweißvorgang auswirkt, ist es vorzugsweise vorgesehen, die Isolierung im Bereich der Kontaktfläche zu entfernen. Dies trägt zu einem besonders prozesssicheren Reibschweißvorgang mit entsprechend guten Ergebnissen bei.

Gemäß einer weiteren vorteilhaften Ausführungsform der Erfindung ist es vorgesehen, dass das elektrische Kontaktelement aus Kupfer hergestellt wird. Dadurch kann dieses besonders gut Strom leiten und weist einen besonders geringen Widerstand auf.

### Figurenbeschreibung

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung gemäß der Ansprüche verwendbar, ohne den Rahmen der Erfindung zu verlassen.

Die Zeichnung zeigt in:
- Fig. 1: eine schematische Draufsicht auf eine Flachleiterschiene aus Aluminium für ein Bordnetz eines Kraftfahrzeugs, wobei eine Kontaktfläche von einer Isolierung befreit worden ist;
- Fig. 2: eine schematische Draufsicht auf eine Oberseite eines Kontaktelements, welches zwei kreisringförmige Reibschweißzonen aufweist;
- Fig. 3: eine schematische Draufsicht auf eine Unterseite des Kontaktelements, an welcher eine umlaufende Klebedichtung angebracht ist;
- Fig. 4: eine schematische Seitenansicht des an der Kontaktfläche der Flachleiterschiene angebrachten Kontaktelements, wobei oberseitig und unterseitig jeweilige Reibschweißdorne dargestellt sind;
- Fig. 5: eine weitere schematische Seitenansicht des an der Kontaktfläche der Flachleiterschiene angebrachten Kontaktelements, wobei ein mittels der Reibschweißdorne durchgeführter Reibschweißvorgang schematisch angedeutet ist;
- Fig. 6: eine schematische Seitenansicht einer aus dem Kontaktelement und der Flachleiterschiene hergestellten Reibschweißverbindung; und in
- Fig. 7: eine schematische Draufsicht auf die aus dem Kontaktelement und der Flachleiterschiene hergestellte Reibschweißverbindung.

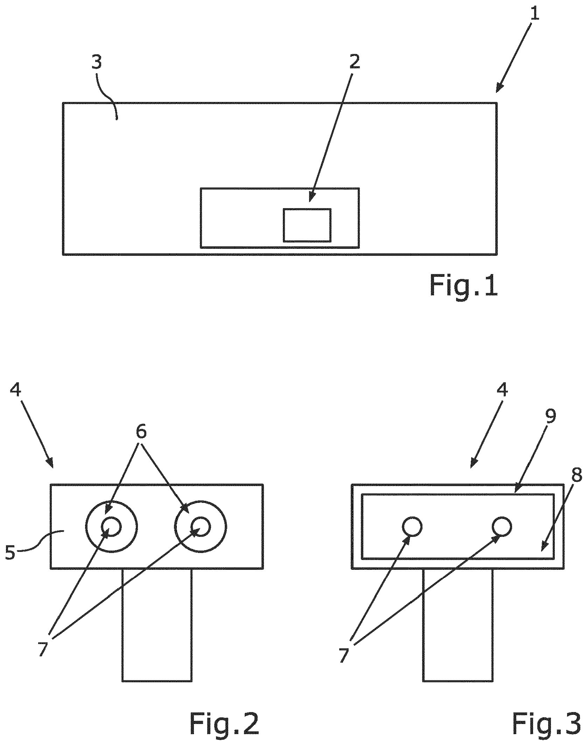

Eine Flachleiterschiene 1 mit einem im Wesentlichen massiven Kern aus Aluminium für ein Bordnetz eines Kraftfahrzeugs ist in einer schematischen Darstellung in Fig. 1 gezeigt. Eine Kontaktfläche 2 wurde von einer Isolierung 3 der Flachleiterschiene 1 befreit und somit freigelegt.

In Fig. 2 ist ein Kontaktelement 4 von oben in einer schematischen Draufsicht gezeigt. An einer Oberseite 5 des elektrischen Kontaktelements 4 sind zwei kreisringförmige Reibschweißzonen 6 gekennzeichnet, welche jeweilige Führungsbohrungen 7 umgeben. Das elektrische Kontaktelement 4 ist aus Kupfer hergestellt und soll an der Kontaktfläche 2 der Flachleiterschiene 1 angebracht werden.

In Fig. 3 ist eine Unterseite 8 des elektrischen Kontaktelements 4 in einer schematischen Draufsicht gezeigt. Eine Klebedichtung 9 ist umlaufend in einem nicht näher bezeichneten oberen Bereich des elektrischen Kontaktelements angebracht worden. An der Unterseite 8 des elektrischen Kontaktelements 4 kann zudem eine hier nicht dargestellte Nut vorgesehen sein, in welcher die Klebedichtung 9 angebracht ist.

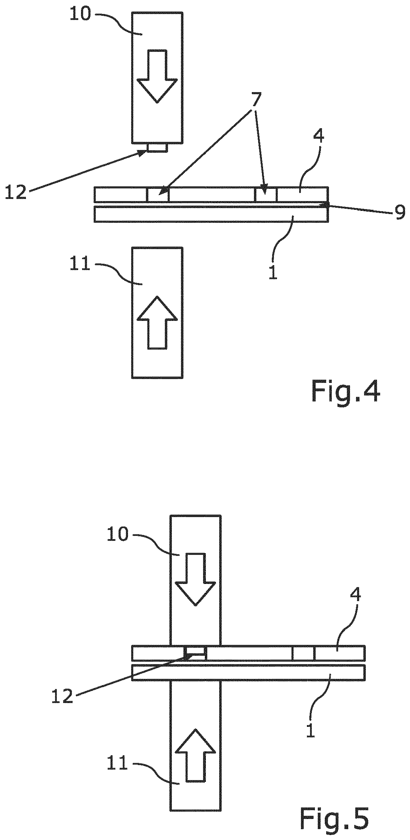

In Fig. 4 sind das elektrische Kontaktelement 4 und die Flachleiterschiene 1 in einer schematischen Seitenansicht gezeigt. Das elektrische Kontaktelement 4 wurde mit seiner hier nicht näher bezeichneten Unterseite 8 auf die hier ebenfalls nicht näher bezeichnete Kontaktfläche 2 der Flachleiterschiene 1 aufgelegt. Oberhalb von dem elektrischen Kontaktelement 4 ist ein Reibschweißdorn 10 angeordnet, wobei unterhalb von der Flachleiterschiene 1 ein weiterer Reibschweißdorn 11 angeordnet ist. Der obere Reibschweißdorn 10 weist zudem einen Vorsprung 12 auf, welcher vorzugsweise zylindrisch ausgebildet ist und von seine Dimensionen an die Führungsbohrungen 7 angepasst ist.

In Fig. 5 sind das elektrische Kontaktelement 4 und die Flachleiterschiene 1 in einer weiteren schematischen Seitenansicht gezeigt, wobei die beiden Reibschweißdorne 10, 11 an das elektrische Kontaktelement 4 bzw. von der Unterseite an die Flachleiterschiene 1 herangedrückt worden sind. Sobald die beiden Reibschweißdorne 10, 11 mit dem elektrischen Kontaktelement 4 bzw. mit der Flachleiterschiene 1 in Kontakt stehen und ein entsprechender Druck aufgebracht wird, werden die beiden Reibschweißdorne 10, 11 in Rotation versetzt. Durch das Rotieren der Reibschweißdorne 10, 11 wird eine Reibschweißung vorgenommen, in Folge dessen das elektrische Kontaktelement 4 in den Reibschweißzonen 6 (siehe Fig. 2) stoffschlüssig mit der aus Aluminium hergestellten Flachleiterschiene 1 verbunden wird.

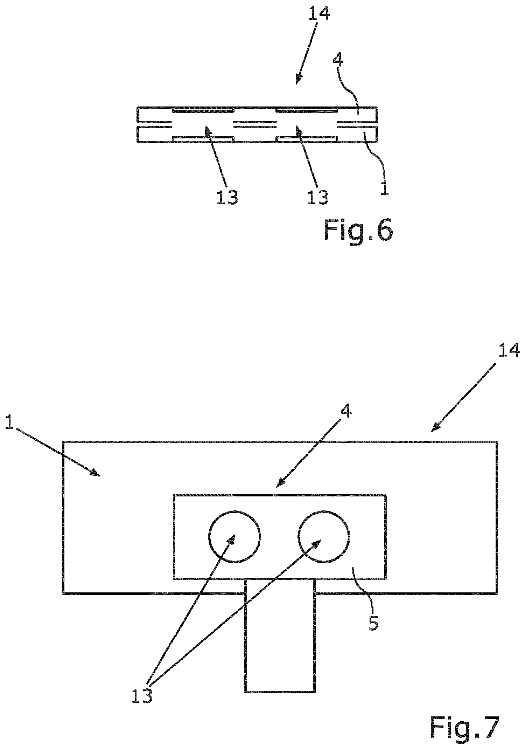

In Fig. 6 ist eine aus der Flachleiterschiene 1 und dem elektrischen Kontaktelement 4 hergestellte Reibschweißverbindung 14 in einer schematischen Seitenansicht gezeigt. Hier sind jeweilige Fügebereiche 13 gekennzeichnet, in denen eine stoffschlüssige Verbindung zwischen dem Kontaktelement 4 und der Flachleiterschiene durch den Reibschweißvorgang hergestellt worden ist. Die Fügebereiche 13 entsprechen dabei zumindest im Wesentlichen den in Fig. 2 gekennzeichneten Reibschweißzonen 6. Durch das Reibschweißen mittels der Reibschweißdorne 10, 11 wurde eine stoffschlüssige Verbindung zwischen dem elektrischen Kontaktelement 4 und der Flachleiterschieine 1 im Bereich der Kontaktfläche 2 hergestellt. Mit einem Minimum an Verfahrensschritten und Werkstoffen konnte so eine langfristig zuverlässige Verbindung zwischen der Flachleiterschiene 1 und dem elektrischen Kontaktelement 4 hergestellt werden.

Zusätzlich zu der bereits erwähnen Klebedichtung 9 kann vor dem Reibschweißvorgang noch zwischen der Unterseite 8 des elektrischen Kontaktelements 4 und der Kontaktfläche 2 der Flachleiterschiene 1 ein in den Figuren nicht dargestellter, als Formteil ausgebildeter Schmelzklebstoff angebracht werden, welcher während des Reibschweißens schmilzt und dadurch die jeweiligen Fügebereiche 13 wasserdicht verschließt. Die Klebedichtung 9, welche zumindest im Wesentlichen den Umriss der Kontaktfläche 2 abbildet, sorgt ebenfalls dafür, dass die Fügebereiche 3 vor Wassereintritt geschützt werden.

In Fig. 7 ist die aus der Flachleiterschiene 1 und dem elektrischen Kontaktelement 4 hergestellte Reibschweißverbindung 14 in einer schematischen Draufsicht gezeigt. Wie zu erkennen, fügt sich das elektrische Kontaktelement 4 nahtlos in die hier nicht erkennbare Kontaktfläche 2 ein. Das elektrische Kontaktelement 4 ist von der vorliegend nicht näher gekennzeichneten Isolierung der Flachleiterschiene 1 umgeben.

Zwar wurde der Reibschweißvorgang nur anhand der aus Aluminium hergestellten Flachleiterschiene 1 beschrieben, jedoch kann ein solcher Reibschweißvorgang auch beispielsweise an einer sogenannten Multischiene für ein Bordnetz eines Kraftfahrzeugs durchgeführt werden. Das elektrische Kontaktelement 4 ist dabei nur schematisch dargestellt worden. Im Wesentlichen können beliebige elektrische Kontaktelemente 4, vorzugsweise aus Kupfer, in der beschriebenen Weise durch Reibschweißen stoffschlüssig mit der Flachleiterschiene 1 oder auch mit den erwähnten Multischienen verbunden werden.

### BEZUGSZEICHENLISTE

- 1: Flachleiterschiene
- 2: Kontaktfläche
- 3: Isolierung
- 4: elektrisches Kontaktelement
- 5: Oberseite des elektrischen Kontaktelements
- 6: Reibschweißzone
- 7: Führungsbohrung
- 8: Unterseite des elektrischen Kontaktelements
- 9: Klebedichtung
- 10: Reibschweißdorn
- 11: Reibschweißdorn
- 12: Vorsprung
- 13: Fügebereich
- 14: Reibschweißverbindung

## Patentansprüche

1. Verfahren zum Anbringen wenigstens eines elektrischen Kontaktelements (4) an einer Aluminiumschiene (1) für ein Bordnetz eines Kraftfahrzeugs, bei welchem das elektrische Kontaktelement (4) mit seiner Unterseite (8) an einer vorgegebenen Kontaktfläche (2) der Aluminiumschiene (1) angeordnet und mittels Reibschweißen in einem innerhalb der Kontaktfläche (2) angeordneten Fügebereich (13) mit der Aluminiumschiene (1) stoffschlüssig verbunden wird,
**dadurch gekennzeichnet, dass**
- zumindest ein Reibschweißdorn (10) auf eine von der Aluminiumschiene (1) abgewandte Oberseite (5) des elektrischen Kontaktelements (4) aufgesetzt und durch Rotieren des Reibschweißdorns (10) das elektrische Kontaktelement (4) stoffschlüssig mit der Aluminiumschiene (1) verbunden wird, wobei vor dem Reibschweißen zumindest eine Führungsbohrung (7) in das elektrische Kontaktelement (4) eingebracht und danach ein Vorsprung (12) des Reibschweißdorns (10) in die Führungsbohrung (7) eingesetzt wird;
- ein weiterer Reibschweißdorn (11) auf eine von der Kontaktfläche (2) abgewandte Seite der Aluminiumschiene (1) gegenüberliegend vom anderen Reibschweißdorn (10) aufgesetzt und durch Rotieren der beiden Reibschweißdorne (10, 11) das elektrische Kontaktelement (4) stoffschlüssig mit der Aluminiumschiene (1) verbunden wird.

2. Verfahren nach Anspruch 1,
**dadurch gekennzeichnet, dass**
vor dem Anordnen des elektrischen Kontaktelements (4) an der Kontaktfläche (2) der Aluminiumschiene (1) eine die Kontaktfläche (2) bedeckende Isolierung (3) entfernt wird.

3. Verfahren nach einem der vorhergehenden Ansprüche,
**dadurch gekennzeichnet, dass**
das elektrische Kontaktelement (4) aus Kupfer hergestellt wird.

4. Verfahren nach Anspruch 1, **dadurch gekennzeichnet, dass**
- vor dem Anordnen des elektrischen Kontaktelements (4) an der Kontaktfläche (2) der Aluminiumschiene (1) an der Unterseite (8) des elektrischen Kontaktelements (4) eine den herzustellenden Fügebereich (13) umschließende Dichtung (9), insbesondere eine selbstklebende Klebedichtung, angebracht wird; und
- vor dem Anordnen des elektrischen Kontaktelements (4) an der Kontaktfläche (2) der Aluminiumschiene (1) an der Unterseite (8) des elektrischen Kontaktelements (2) ein als Formteil ausgebildeter Schmelzklebstoff angebracht wird, welcher beim Reibschweißen schmilzt und dadurch den Fügebereich (13) zumindest wasserdicht verschließt.

## Claims

1. Method for applying at least one electric contact element (4) to an aluminium rail (1) for a vehicle electrical system of a motor vehicle, in which the electric contact element (4) is arranged with its bottom side (8) on a predetermined contact surface (2) of the aluminium rail (1) and is connected in a materially bonded manner by means of friction welding to the aluminium rail (1) in a joining region (13) arranged within the contact surface (2),
**characterized in that**
- at least one friction welding mandrel (10) is placed onto a top side (5) of the electric contact element (4), the top side (5) facing away from the aluminium rail (1), and the electric contact element (4) is connected in a materially bonded manner to the aluminium rail (1) by rotation of the friction welding mandrel (10), wherein at least one guide bore (7) is introduced into the electric contact element (4) before the friction welding and a protrusion (12) of the friction welding mandrel (10) is then inserted into the guide bore (7);
- a further friction welding mandrel (11) is placed onto a side of the aluminium rail (1) facing away from the contact surface (2) opposite the other friction welding mandrel (10) and the electric contact element (4) is connected in a materially bonded manner to the aluminium rail (1) by rotation of the two friction welding mandrels (10, 11).

2. Method according to Claim 1,
**characterized in that**
before the electric contact element (4) is arranged on the contact surface (2) of the aluminium rail (1) insulation (3) covering the contact surface (2) is removed.

3. Method according to either of the preceding claims, **characterized in that**
the electric contact element (4) is produced from copper.

4. Method according to Claim 1, **characterized in that**
- before the electric contact element (4) is arranged on the contact surface (2) of the aluminium rail (1), a seal (9) surrounding the joining region (13) to be produced, in particular a self-adhesive adhesive seal, is provided on the bottom side (8) of the electric contact element (4); and
- before the electric contact element (4) is arranged on the contact surface (2) of the aluminium rail (1), a hot melt adhesive which is in the form of a shaped part and which melts upon friction welding and thereby seals the joining region (13) so as to be at least water-tight is provided on the bottom side (8) of the electric contact element (2).

## Revendications

1. Procédé de montage d'au moins un élément de contact électrique (4) sur un rail en aluminium (1) pour un réseau de bord d'un véhicule automobile, dans lequel l'élément de contact électrique (4) est agencé avec son côté inférieur (8) sur une surface de contact prédéfinie (2) du rail en aluminium (1) et est relié par liaison de matière au rail en aluminium (1) au moyen d'un soudage par friction dans une zone de jonction (13) agencée à l'intérieur de la surface de contact (2),
**caractérisé en ce que**
- au moins un mandrin de soudage par friction (10) est placé sur un côté supérieur (5) de l'élément de contact électrique (4) détourné du rail en aluminium (1) et l'élément de contact électrique (4) est relié au rail en aluminium (1) par liaison de matière par rotation du mandrin de soudage par friction (10), au moins un alésage de guidage (7) étant pratiqué dans l'élément de contact électrique (4) avant le soudage par friction et une saillie (12) du mandrin de soudage par friction (10) étant ensuite insérée dans l'alésage de guidage (7) ;
- un autre mandrin de soudage par friction (11) est placé sur un côté du rail en aluminium (1) détourné de la surface de contact (2), à l'opposé de l'autre mandrin de soudage par friction (10), et l'élément de contact électrique (4) est relié par liaison de matière au rail en aluminium (1) par rotation des deux mandrins de soudage par friction (10, 11).

2. Procédé selon la revendication 1,
**caractérisé en ce que**
avant l'agencement de l'élément de contact électrique (4) sur la surface de contact (2) du rail en aluminium (1), une isolation (3) recouvrant la surface de contact (2) est retirée.

3. Procédé selon l'une quelconque des revendications précédentes,
**caractérisé en ce que**
l'élément de contact électrique (4) est fabriqué en cuivre.

4. Procédé selon la revendication 1,
**caractérisé en ce que**
- avant l'agencement de l'élément de contact électrique (4) sur la surface de contact (2) du rail en aluminium (1), un joint d'étanchéité (9) entourant la zone de jonction (13) à fabriquer, notamment un joint d'étanchéité adhésif autocollant, est appliqué sur le côté inférieur (8) de l'élément de contact électrique (4) ; et
- avant l'agencement de l'élément de contact électrique (4) sur la surface de contact (2) du rail en aluminium (1), un adhésif fusible réalisé sous forme de pièce moulée est appliqué sur le côté inférieur (8) de l'élément de contact électrique (2), qui fond lors du soudage par friction et ferme ainsi la zone de jonction (13) de manière au moins étanche à l'eau.
